# EUROPEAN PATENT APPLICATION

(11) **EP 1 130 429 A1**
(43) Date of publication of application: **05.09.2001**
(21) Application number: 00400575.7
(22) Date of filing: 02.03.2000
(51) Int. Cl.: G02B 6/255

(54) **Method and apparatus for aligning and splicing of optical fibers**

(71) Applicant: Corning Incorporated, Corning, New York 14831 (US)
(72) Inventor: Herve, Patrick J.P., Corning, NY 14831 (US); Pujol, Gilbert D., Corning, NY 14831 (US)
(74) Representative: Grunfeld, David Peter

(57) **Abstract**

A method and apparatus for aligning and splicing optical fibers (12, 14, 16, 18) whereby the splice losses may be accurately calculated. Two optical fibers (12, 16) are loaded into two grooved supports (20, 22) and secured in place. The optical fibers (12, 16) are cleaved resulting in four cleaved ends (46, 48, 50, 52). The second grooved support (22) is rotated about an axis (72) aligning cleaved ends (46, 50) and cleaved ends (48, 52) with one another. The cleaved ends (46, 50) are then spliced to one another. The splice losses associated with splicing cleaved ends (46, 50) to one another may be accurately estimated by splicing the remaining cleaved ends (48, 52) together and measuring the optical losses across the splice.

## Description

### Background of the Invention

### 1. Field of the Invention

The present invention relates generally to splicing optical waveguides, and particularly to a method for aligning optical waveguides for fusion splicing.

### 2. Technical Background

Fusion splicing of optical waveguide fibers is one method currently used for permanently connecting optical fibers. Fusion splicing is done using specially designed equipment. The equipment and techniques used in making fusion splices have developed to the point where splices having insertion losses on the order of 0.05dB and good mechanical strength can be produced with relatively short splicing times. While these desirable traits are obtainable on a splice by splice basis, current methods are proving inadequate with the emergence of opto-electronic devices requiring numerous splices, in which a single below specification splice can cause the device to either be scrapped or require extensive rework.

Current fusion splicing equipment typically requires a number of manual operations be performed for each splice and relies on visual alignment of the optical fibers before splicing. Typically, the last step in the splicing process is estimating the insertion loss. The insertion loss for a fusion splice is estimated by correlating the amount of misalignment of the cores of the optical fibers in the splice region, to known test data. These estimation techniques can lead to bad splices being labeled as good and good splices being labeled bad. Thus, the actual insertion loss of the splice is not known until it is tested. It is therefore desirable to develop fusion splicing equipment and techniques to improve the quality of the splices and facilitate automation of the fusion splicing process.

### Summary of the Invention

One aspect of the present invention relates to a method for fusion splicing optical fibers that includes the steps of mounting two optical fibers to two grooved supports. A portion is severed from the end of each optical fiber, so that the two optical fibers to be spliced are on separate supports. The supports are then repositioned so the ends of the two optical. fiber to be spliced are located near one another and the ends of the severed portions are near one another. The relative position of the optical axes of the two optical fibers to one another and the optical axes of the severed portions to one another are nearly identical. Light is introduced into the severed portion of optical fiber mounted to the first support and the second support is positioned so that light is emitted from the severed portion of optical fiber mounted to the first support and introduced into the severed portion of optical fiber mounted to the second support.

The optical axes of the severed portions are aligned with one another, simultaneously bringing the optical axes of the optical fibers to be spliced into alignment with one another. When the desired degree of alignment is achieved the optical fibers are fusion spliced together.

Another aspect of the present invention relates to a fusion splicer that includes a support for holding a first and second optical fibers. The fusion splicer also includes a movable support for holding a third and a fourth optical fibers and a light source for introducing light into the second optical fiber. A photodetector is located to receive light emitted from the fourth optical fiber. Prior to splicing, the optical axes of the second and the fourth optical fibers are aligned by a controller that repositions the movable support until the light received by the photodetector has a certain intensity. The fusion splicer also includes a heat source for fusing one end of the first optical fiber to an end of the third optical fiber and one end of the second optical fiber to an end of the fourth optical fiber.

The method of the present invention results in a number of advantages over the prior art methods of making fusion splices between optical fibers. For example, the method allows the precise alignment of the optical fibers to be spliced without relying on complex vision systems.

The method of the present invention allows for the process to be automated, thus decreasing the number of manual operations required in making a fusion splice. Another advantage of the present invention is that it enhances the quality of optical devices by allowing a more accurate determination of the insertion loss of fusion splices than the estimation methods currently used.

Another advantage of the present invention is that it reduces the cost associated with erroneously reworking acceptable splices that current splice evaluation techniques deem unacceptable.

Another advantage of the present invention is that it reduces the cost associated with erroneously accepting substandard splices that current splice evaluation techniques deem acceptable.

Additional features and advantages of the invention will be set forth in the detailed description which follows, and in part will be readily apparent to those skilled in the art from the description or recognized by practicing the invention as described in the written description and claims hereof, as well as the appended drawings.

It is to be understood that both the foregoing general description and the following detailed description are merely exemplary of the invention, and are intended to provide an overview or framework to understanding the nature and character of the invention as it is claimed.

The accompanying drawings are included to provide a further understanding of the invention, and are incorporated in and constitute a part of this specification. The drawings illustrate one or more embodiments of the invention, and together with description serve to explain the principals and operation of the invention.

### Brief Description of the Drawings

Figure 1 is a schematic diagram of a fusion splicer embodiment of the present invention;
Figure 2 is a perspective view of a grooved substrate used to make the grooved supports of a fusion splicer embodiment of the present invention;
Figure 3 is a perspective view of the grooved supports of a fusion splicer embodiment of the present invention;

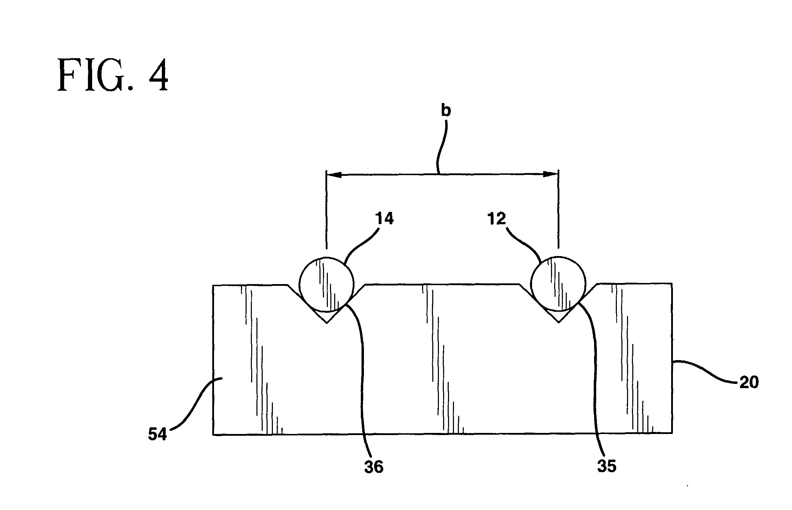

Figure 4 is an end view of a grooved support of a fusion splicer embodiment of the present invention;
Figure 5 is a schematic representation of a fusion splicer embodiment of the present invention;
Figure 6A is a schematic representation of an alternative fusion splicer embodiment of the present invention;
Figure 6B is a side elevation view of a grooved support of Figure 6A taken through line A-A in Figure 6A;
Figure 7 is a schematic representation of an alternative fusion splicer embodiment of the present invention;
Figure 8 is a schematic representation of an alternative fusion splicer embodiment of the present invention;
Figure 9 is a schematic representation of an alternative fusion splicer embodiment of the present invention;
Figure 10 is a flowchart showing the steps of a process in which the present invention is embodied in block diagram form.

### Detailed Description of the Preferred Embodiments

Reference will now be made in detail to the present preferred embodiments of the invention, examples of which are illustrated in the accompanying drawings. Whenever possible, the same reference numbers will be used throughout the drawings to refer to the same part or parts. The present invention relates to splicing two optical fibers 12, 16 together. The optical fibers 12, 16 may be any type of optical waveguide fiber capable of being joined to another optical waveguide fiber by fusion splicing. Exemplary of the types of optical waveguide fibers that may be joined to other optical waveguide fibers by fusion splicing are single mode and multi-mode glass fibers having core and cladding regions. The optical fibers 12, 16 may be individual optical fibers or leads or pigtails of an optical component.

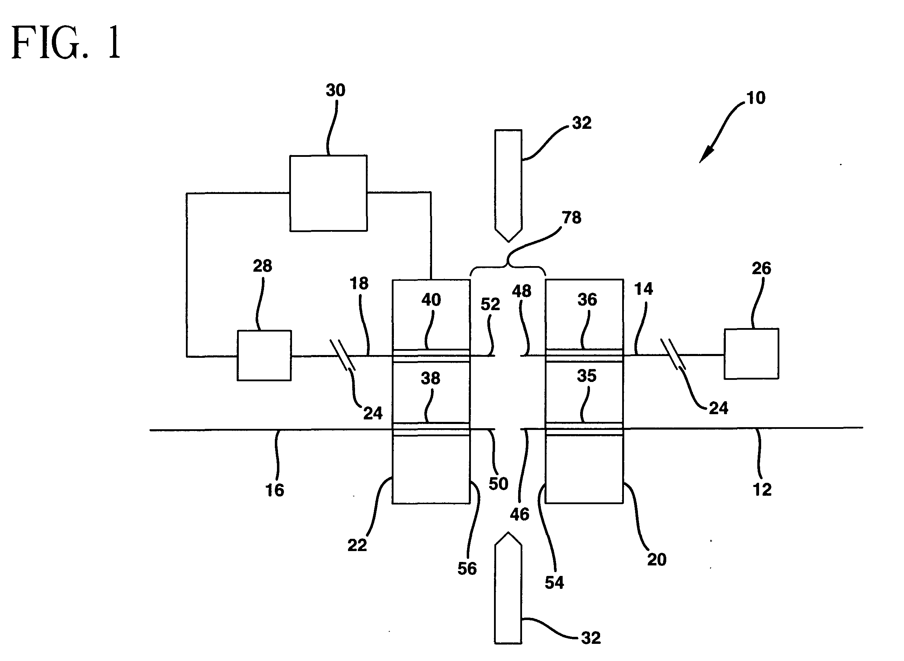

An exemplary embodiment of the fusion splicer of the present invention is shown in Figure 1, as is designated generally throughout by reference numeral 10.

In accordance with the invention, the present invention for a fusion splicer 10 includes a first grooved support 20 and a second grooved support 22. The grooved supports 20, 22 are positioned with a facing edge 54 of the first grooved support 20 facing a facing edge 56 of the second grooved support 22. The first grooved support 20 includes two grooves 35, 36 for holding a first optical fiber 12 and a second optical fiber 14. The grooves 35, 36 are V-grooves of approximately the same width and depth, with the sides of both grooves sloping at substantially the same angle. The width of the grooves 35, 36 is exaggerated in Fig. 1 for clarity of illustration. The grooves 35, 36 are preferably parallel to one another.

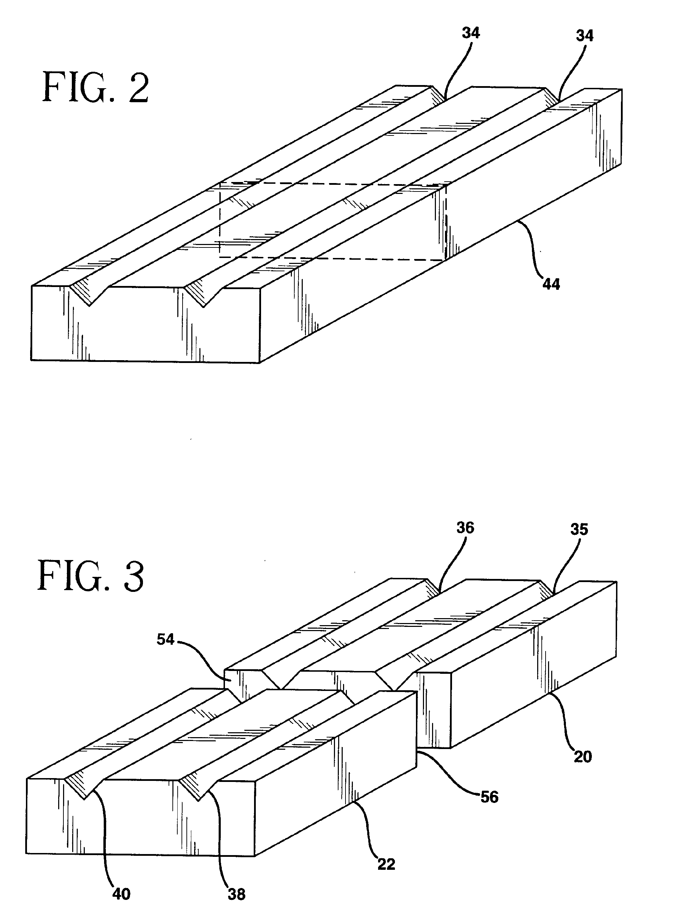

The second grooved support 22 includes two grooves 38, 40 for holding a third optical fiber 16 and a fourth optical fiber 18. The grooves 38, 40 are V-grooves of approximately the same width and depth, with the sides of both grooves sloping at substantially the same angle. The width of the grooves 38, 40 is exaggerated in Fig. 1 for clarity of illustration. The grooves 38, 40 are preferably parallel to one another. The distance b between the centers of the groove 35 and groove 36 along the facing edge 54 of the first grooved support 20 is the same as the distance c between the centers of the groove 36 and groove 38 along facing edge 56 of the second grooved support 22. As shown in Figures 2 and 3, the first grooved support 20 and the second grooved support 22 may be obtained by making two parallel, precision grooves 34 in a single substrate 44 and then severing the grooved substrate in a plane 80, shown in phantom in Figure 2, to yield the first grooved support 20 and the second groove support 22. The grooves 35, 36, 38, 40 are capable of maintaining the relative position of optical fibers placed into them with a high degree of reliability. Exemplary of this is the ability of high precision machined grooves to position the optical axes of two optical fibers to within 0.2µm of the design distance between the optical axes of two optical fibers.

The second optical fiber 14 is a portion removed from the first optical fiber 12. The second optical fiber 14 is removed from the end of the first optical fiber 12 that is to be spliced to a third optical fiber 16. The second optical fiber 14 may be removed from the first optical fiber 12 by fiber splicing preparation techniques known to those skilled in the art. Exemplary of fiber splicing preparation techniques are first scoring the fiber, breaking the fiber at the score line by bending and then cleaning the fiber to remove any coatings, residues or foreign objects that could contaminate the fusion splice. The splicing preparation results in a first cleaved end 46 on the first optical fiber 12 and a second cleaved end 48 on the second optical fiber 14.

The first optical fiber 12 and the second optical fiber 14 are placed in the grooves 35, 36 , respectively, of the first grooved support 20. The first cleaved end 46 and the second cleaved end 48 are placed along the facing edge 54 of the first grooved support 20.

The fourth optical fiber 18 is a portion of the third optical fiber 16 removed from the third optical fiber 16. The fourth optical fiber 14 is removed from the end of the third optical fiber 16 that is to be spliced to a first optical fiber 12. The fourth optical fiber 14 may be removed from the third optical fiber 16 by fiber splicing preparation techniques known to those skilled in the art. The splicing preparation results in a third cleaved end 50 on the third optical fiber 16 and a fourth cleaved end 52 on the fourth optical fiber 18. The third optical fiber 16 and the fourth optical fiber 18 are placed in the grooves 38, 40 of the second grooved support 22. The third cleaved end 50 and the fourth cleaved end 52 are placed at a facing edge 56 of the second grooved support 22. Temporary connectors 24 are attached to the ends of the second optical fiber 14 and the fourth optical fiber 18 opposite the ends 48, 52 of these fibers 14, 18. Exemplary of temporary connectors 24 are free lens systems and temporary mechanical connectors. The temporary connector 24 is used to connect the second optical fiber 14 to a light source 26. Exemplary light sources are lasers and in particular laser diodes. The light source 26 is used to inject light into the second optical fiber 14.

The temporary connector 24 attached to the fourth optical fiber 18 connects the fourth optical fiber 18 to a photodetector 28. The photodetector 28 measures the amount of light entering the cleaved end of the fourth optical fiber 18. Exemplary photodetectors are those commercially available from Hewlett-Packard.

The first cleaved end 46 and the second cleaved end 48 are positioned such that they extend beyond the facing edge 54. The first cleaved end 46 and the second cleaved end 48 are positioned with respect to the facing edge54 in order to facilitate the fusion splicing process. Exemplary of this position would be sliding the first optical fiber 12 and the second optical fiber 14 along the parallel grooves 35, 36 of the first grooved support 20 until the first cleaved end 46 and the second cleaved end 48 are substantially co-planar. The first optical fiber 12 and the second optical fiber 14 are then secured in the desired position. The first optical fiber 12 and the second optical fiber 14 may be held in position on the first grooved support 20 by clamping, bonding, vacuum pressure or any other of the ways known to those skilled in the art for maintaining the position of an optical fiber in a V-groove for fusion splicing.

Similarly, the third cleaved end 50 and the fourth cleaved end 52 are positioned such that they extend beyond the facing edge 56. The third cleaved end 50 and the fourth cleaved end 52 are positioned with respect to the facing edge 56 in order to facilitate the fusion splicing process. Exemplary of this position would be sliding the third optical fiber 16 and the fourth optical fiber 18 along the parallel grooves 38, 40 of the second grooved support 22 until the he third cleaved end 50 and the fourth cleaved end 52 are substantially co-planar. The third optical fiber 16 and the fourth optical fiber 18 are then secured in the desired position.

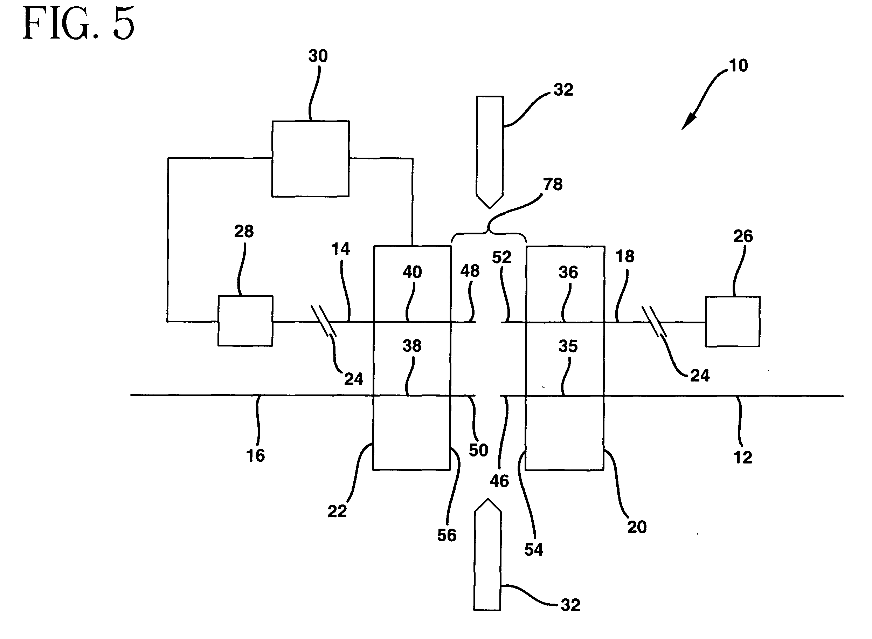

Alternatively, as shown in Figure 5, the first optical fiber 12 is placed in a groove 35 of the first grooved support 20 and the second optical fiber 14 is placed in a groove 40 of the second grooved support 22. The fibers 12, 14 are oriented so that the cleaved ends 46,48 of the optical fibers 12, 14 are in the gap 78 between the grooved supports 20, 22. Similarly, the third optical fiber 16 is placed in groove 38 of the second grooved support 22 and the fourth optical fiber 18 is placed in groove 36 of the first grooved support 20. The optical fibers 16, 18 are oriented so that the cleaved ends 50,52 of the optical fibers 16, 18 are in the gap 78 between the grooved supports 20, 22.

The cleaved ends 46, 52 of the first and fourth optical fibers 12, 18 are positioned to be substantially coplanar in the gap 78, with both fibers 12, 18 extending the same distance into the gap 78. Similarly, the cleaved ends 48, 50 of the second and third optical fibers 14, 16 are positioned to be substantially coplanar in the gap 78, with both fibers 14, 16 extending the same distance into the gap 78. Preferably all four optical fibers 12, 14, 16, 18 are cantilevered the same distance into the gap 78.

The first grooved support 20 and the second grooved support 22 are positioned such that the first cleaved end 46 of the first optical fiber 12 and the third cleaved end 50 of the third optical fiber 16 that are to be spliced together are brought into close proximity to one another. Likewise the second cleaved end 48 of the second optical fiber 14 and the fourth cleaved end 52 of the fourth optical fiber 18 are brought into close proximity to one another.

The relative positions of the first grooved support 20 and the second grooved support 22 are adjusted until the photodetector 28 registers that a certain amount of light is introduced into the fourth optical fiber 18 by the second optical fiber 14. The certain amount of light is a predetermined intensity corresponding to the desired splice losses of the completed splice. The first optical fiber 12 and the third optical fiber 16 are then fusion spliced together by the heat source 32. In one embodiment, the relative positioning of the first and second grooved supports 20, 22 is controlled by a controller 30. The controller 30 controls the movement of at least one of the grooved supports 20,22.

If it is desired to obtain an accurate estimate of the splice loss between the first and third optical fibers 12, 16, the second optical fiber 14 may be fusion spliced to the fourth optical fiber 18 using the same fusion process. The splice loss is determined by comparing the intensity of light reaching the photodetector 28 to the intensity of light generated by the light source 26.

In one embodiment of the invention the photodetector 28 monitors the light intensity during the splicing operation and the positions of the first grooved support 20 and the second grooved support 22 are adjusted, by a controller 30, to maintain a certain level of light transmission through the splice.

In an alternative embodiment of the invention either the first grooved support 20 or the second grooved support 22 may be fixed in space and the position of remaining grooved support 22 or 20, respectively, is adjustable.

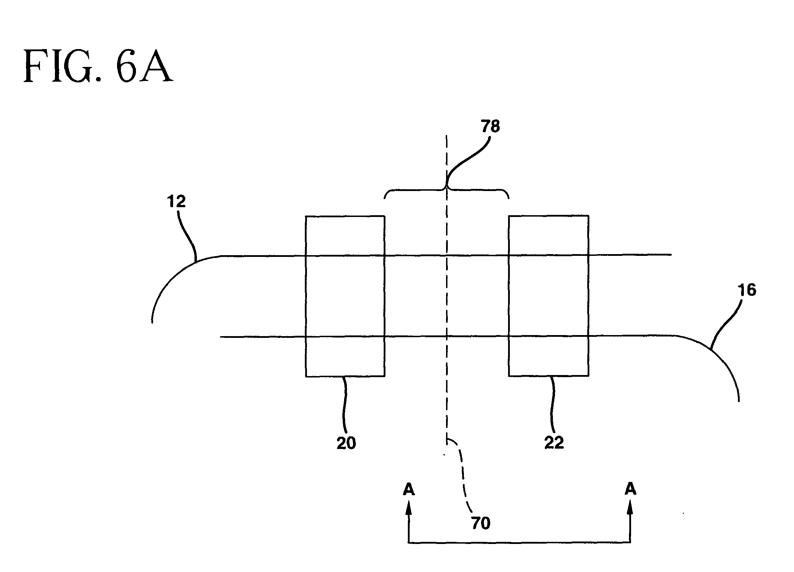

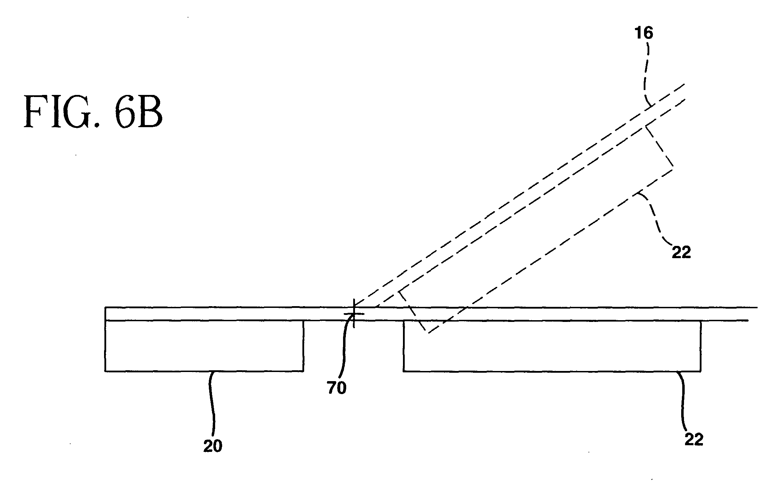

An additional embodiment of the invention, as embodied herein and depicted in Figures 6 through 9, the fusion splicer 10 includes a first grooved support 20 and a second grooved support 22. As illustrated in Figure 6, the first and second grooved supports 20,22 are used to position two optical fibers 12, 16 for cleaving and splicing. The first grooved support 20 and second grooved support 22 are separated by a gap 78. The width of the gap 78 is selected to facilitate both the cleaving and fusion splicing of the fibers 12, 16 to be spliced to one another. In the splicing process two optical fibers 12, 16 are oriented with respect to one another as shown in Figure 6 and held in position by the first and second grooved supports 20, 22. Factors to be considered in determining the width of the gap 78 include desired effect of the length of fiber cantilevered from the supports 20, 22 after the cleaving on the splicing process and the size of the cleaving tool that must fit between the supports 20, 22. Typically, a gap 78 of about 0.5mm to about 5.0mm has been found sufficient.

The first grooved support 20 includes two parallel, precision grooves 35, 36. The second grooved support 22 has two parallel, precision grooves 38, 40. The pitch of the grooves 35, 36 of the first grooved support 20 is equal to the pitch of the grooves 38, 40 of the second grooved support 22. Groove 35 and groove 38 are configured to simultaneously engage and hold the fiber 12 straight. Groove 36 and groove 40 are configured to simultaneously engage an optical fiber 16 and hold the optical fiber 16 straight.

In order to splice optical fiber 12 to optical fiber 16 both fibers must be prepared for splicing. Myriad techniques for the preparation of optical fibers for fusion splicing exist and will not be repeated in detail here. These techniques typically include the steps of cleaving and cleaning each of the fibers to produce an end suitable for splicing. Cleaving of the optical fibers 12, 16 is accomplished by scribing the optical fibers 12, 16 between the first and second grooved supports 20, 22 along line 70 perpendicular to the optical axes of both optical fibers 12, 16.

A controller (not shown) rotates the second support 22 about an axis parallel to line 70 to bend the portion of the optical fibers 12, 16 between the first and second supports 20, 22. The bending of the optical fiber 12, 16 completes the cleaving operation. This axes, for example, may, but is not required to, be coincident with line 70. Cleaving the optical fibers 12, 16 results in two additional fiber pieces 14, 18 and four cleaved fiber ends 46, 48, 50, 52. The controller may include electrical, electro-mechanical, hydraulic and mechanical linkages that are worked by digitally programmed devices, analog circuitry or manual adjustment by an operator.

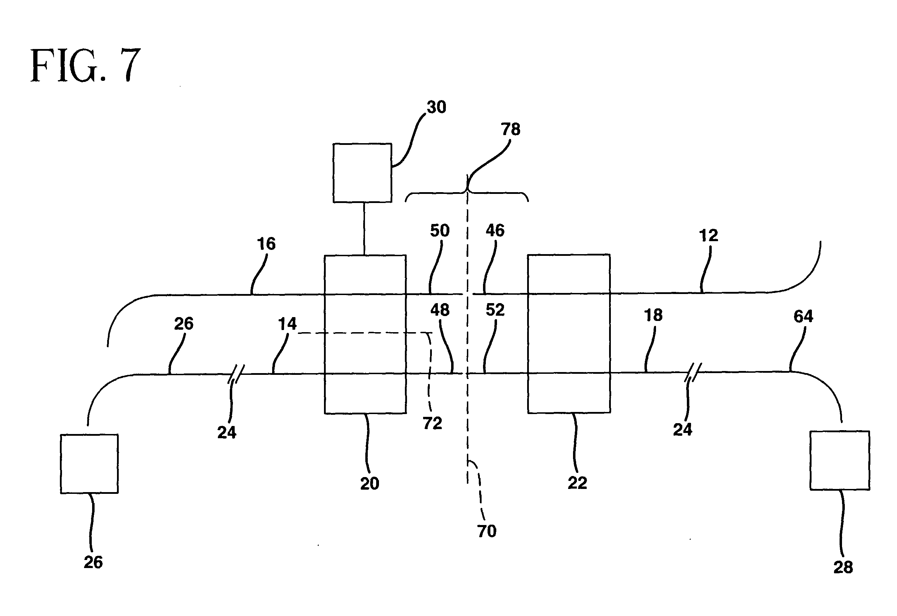

As illustrated in Figure 7 a controller 30 rotates the second support 22 about an axis 72 located between and parallel to the fibers 14, 16 to bring cleaved end 48 into close proximity with cleaved end 52 and cleaved end 46 into close proximity with cleaved end 50.

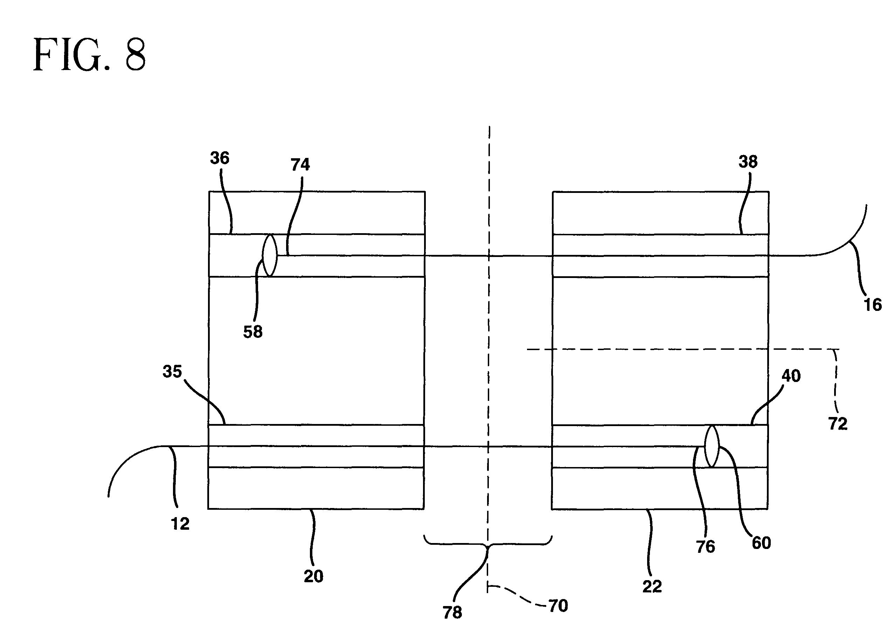

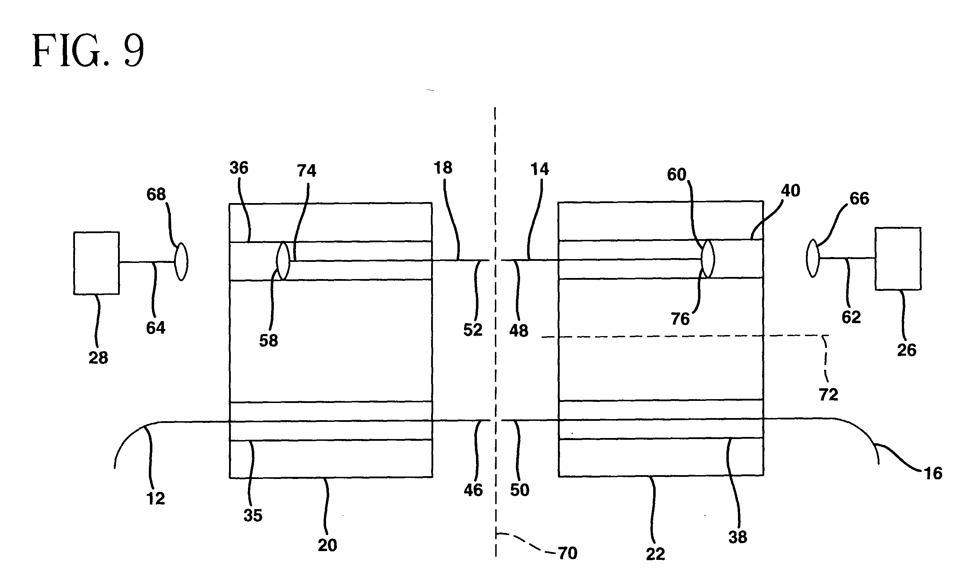

Exemplary of temporary connector 24 is the free lens system illustrated in Figures 8 and 9. A lens 66 emits light produced by a light source 26. Another lens 60 is positioned to introduce light emitted from the lens 66 into the portion of the optical fiber 14 severed from the optical fiber 12. The light travels through the optical fiber 14 and is transmitted from the cleaved end 48 into the cleaved end 52 of optical fiber 18. The light is the emitted from the end 74 of the optical fiber and travels through the lens 58. Lens 68 is positioned to direct light emitted from the lens 58 to a photodetector 28. The photodetector 28 measures the intensity of the light directed to it by the lens 68.

In an exemplary embodiment of the free lens system, the lens 60 optically connects the portion of the optical fiber 14 severed from the optical fiber 12 t to the light source 26. The light source 26 is connected to a lens 66 by an optical waveguide 62. The lens 66 is positioned so that light generated by the light source 26 is emitted through the lens 66 and enters the first lens 58.

The second grooved support 22 includes a second lens 60. The second lens 60 is positioned in fourth groove 40. The fourth optical fiber 18 is placed in the fourth groove 40 and is banked against the second lens 60. The second lens 60 allows the fourth optical fiber 18 to be optically connected to the photodetector 28. The photodetector 28 is connected to an optical waveguide 64 that is in turn connected to a lens 68. The lens 68 is positioned so that light emitted from the second lens 60 enters the lens 68 and travels to the photodetector 28.

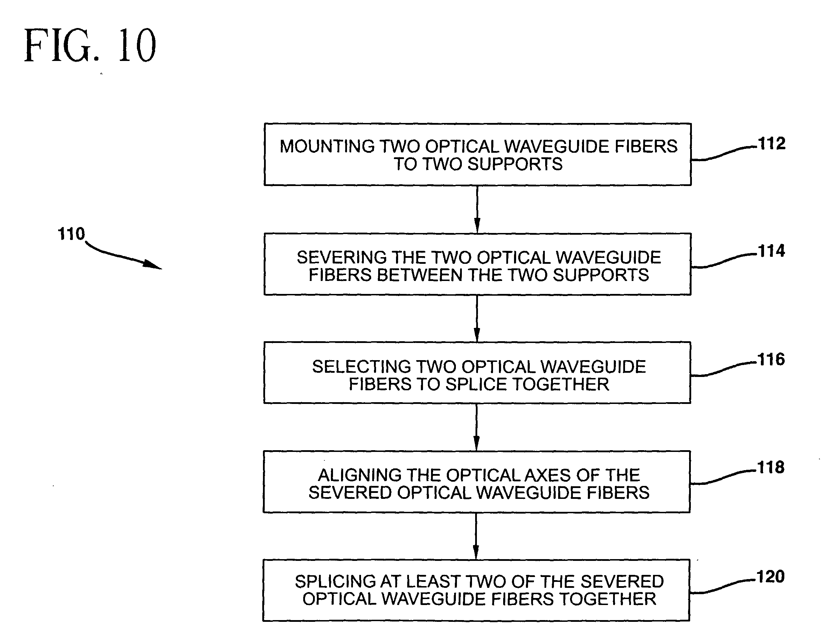

Exemplary of a process in which the present invention is embodied is the automation of the fusion splicing process. Figure 8 is exemplary of the first step in the process illustrated in Figure 10. The first optical fiber 12 and the third optical fiber 16 are placed into the grooves 35, 40 and 36, 38 respectively, of the first and second grooved supports 20, 22. The first optical fiber 12 is positioned so that its end 76 contacts and is optically aligned with lens 60. The third optical fiber 16 is positioned so that its end 74 contacts and is optically aligned with a lens 58. The first and third optical fibers 12, 16 are clamped to the first grooved support 20 and the second groove support 22. The first optical fiber 12 and the third optical fiber 16 are then tensioned between the first grooved support 20 and the second grooved support 22. The first and third optical fibers 12, 16 are scribed along line 70 using a micro-tool, exemplary of which is an edged wheel. The first and third optical fibers 12, 16 are cleaved by applying a bending stress to the fibers.

The second grooved support 22 is rotated about an axis parallel to the two parallel, precision grooves 38, 40. Preferably the axis of rotation is approximately midway between the two parallel, precision grooves 38, 40. The fibers are positioned and spliced as described above.

At the conclusion of the splicing process, the optical properties of the splice between the second optical fiber 14 and the fourth optical fiber 18 are measured. The optical connection between the first lens 58 and the lens 66 and the optical connection between the second lens 60 and the lens 68 are calibrated frequently in order to ensure accuracy in measuring splice losses.

An additional embodiment of the invention, as embodied herein and depicted in Figure 7, the invention includes a first groove support 20 and second groove support 22 that that have a gap 78 between them. The width of the gap 78 is chosen in order to facilitate both the cleaving of the optical fibers 12, 16 and the subsequent fusion splicing. A first optical fiber 12 is secured to both the first support 20 and the second support 22. A second optical fiber 16 is secured to the first groove support 20 and the second grooved support 22. The first optical fiber 12 and the third optical fiber 16 are oriented as shown. Using conventional methods the first optical fiber 12 and a second optical fiber 16 are cleaved along the plane designated by the numeral 70 in figure 8. The cleaving operation results in a second optical fiber 14 being separated from the first optical fiber 12 and a fourth optical fiber 18 being separated from a third optical fiber 16. The cleaved end of the first optical fiber 12 will be designated 46. The numeral 48 will designate the cleaved end of the second optical fiber 14. The numeral 50 will designate the cleaved end of the third optical fiber 16 and the numeral 52 will designate the cleaved end of the fourth optical fiber 18.

After the cleaving operation in complete the second groove support 22 is rotated about a longitudinal axis 72 such that the cleaved end 46 of the first optical fiber 12 is brought in the close proximity with the cleaved end 50 of the third optical fiber 16 and the cleaved end 52 of the fourth optical fiber 18 is brought in the close proximity with the cleaved end 48 of the second optical fiber 14. The second optical fiber 14 is connected to a light source 26 with a temporary connector 24. The non-cleaved end of the optical fiber 18 is connected to a photodetector 28 by a temporary connector 24. The relative positions of the first grooved support 20 and the second grooved support 22 are manipulated until the intensity of the light emitted from the cleaved end 48 and entering cleaved end 52, reaches a certain value as indicated by the photodetector 28. Once this value is reached cleaved end 46 of the first optical fiber 12 is fusion spliced to the cleaved end 50 of the third optical fiber 16. This fusion splicing may occur by either immersion in a plasma field generated by electric arc discharge or may be accomplished by heating the ends 50, 46 with a laser. It is not necessary that the cleaved end 48 be fusion spliced to the cleaved end 52. If it is desired to have a measured estimate of the splice losses in the fusion splice between first optical fiber 12 and the second optical fiber 16 then optical fiber 14 should be spliced to optical fiber 18 simultaneous with the splicing of optical fiber 12 to third optical fiber 16. This accomplished by placing the end cleaved end 48 and the cleaved end 52 in the same electric arc discharge field or simultaneously heating it with a laser. Alternatively, the splice can undergo active alignment throughout the splicing operation. This may be achieved by continually monitoring the intensity of the light emitted by cleaved end 48 and received by cleaved end 52 as indicated by the photodetector 28. In moving second groove support 22 continue adjusting the relative positions of first groove support 20 and second groove support 22 throughout the splicing operation to maintain a certain intensity of light as indicated by the photodetector 28. An advantage of using this embodiment of the invention to splice the fibers is that the orientation of the fibers with respect to one another is maintained throughout the operation, thereby generating a high reliability that the splice loss measured by the photodetector 28 accurately reflects the losses in the splice formed between the first optical fiber 12 and the third optical fiber 16.

Figure 10 illustrates a process embodiment of the present invention. The method for splicing optical fibers 110 includes a step 112 of mounting two optical waveguide fibers to two supports. The two optical waveguide fibers are then severed between in the two supports in step 114. In step 116 a two optical waveguide fibers are selected for splicing to one another. The optical axes of the selected optical waveguide fibers are aligned in step 118 and in step 120 the selected optical waveguide fibers are spliced together.

It will be apparent to those skilled in the art that various modifications and variations can be made in the present invention without departing from the spirit and scope of the present invention. Thus, it is intended that the present patent covers the modifications and variations of this invention, provided that they come within the scope of the appended claims and their equivalents.

## Claims

1. A method for the fusion splicing of optical fibers comprising:
severing a second optical fiber from a first optical fiber;
mounting said first optical fiber to a first grooved support;
mounting said second optical fiber to a second grooved support;
severing a fourth optical fiber from a third optical fiber;
mounting said third optical fiber to said second grooved support moveable with respect to said first grooved support;
mounting said fourth optical fiber to said first grooved support so that light emitted from one end of said fourth optical fiber strikes a photodetector coupled to said fourth optical fiber;
introducing light into said second optical fiber;
positioning said second grooved support such that light is transmitted from said second optical fiber to said fourth optical fiber;
aligning the optical axes of said second optical fiber and fourth optical fiber; and
forming a first fusion splice between said first optical fiber and said third optical fiber.

2. The method of claim 1 wherein the optical axis of one end of said first optical fiber and the optical axis of said second optical fiber are substantially coplanar and substantially parallel; and the optical axis of one end of said third optical fiber and the optical axis of said fourth optical fiber are substantially coplanar and substantially parallel.

3. The method of claim 1 wherein the step of aligning the optical axes of said second optical fiber and said fourth optical fiber further comprises the steps of:
monitoring the light emitted by said fourth optical fiber; and
moving said second grooved support until the light emitted from said fourth optical fiber has a certain value.

4. The method of claim 3 further including the steps after the step of fusion splicing said first optical fiber to said third optical fiber and said second optical fiber to said fourth optical fiber, of:
introducing light of a known intensity into said second optical fiber;
measuring the intensity of the light transmitted from said second optical fiber to said fourth optical fiber through said first fusion splice; and calculating the splice losses.

5. The method of claim 1 wherein the steps of forming said first fusion splice and forming said second fusion splice are performed substantially simultaneously.

6. The method of claim 5 wherein the intensity of the light emitted by said fourth optical fiber is monitored during the step of forming said second fusion splice.

7. The method of claim 6 wherein the step of forming said second fusion splice further comprises the step of maintaining the intensity of the light emitted by said fourth optical fiber at a certain level.

8. An optical fiber splicing apparatus comprising:
a support for holding a first optical fiber and a second optical fiber;
a movable support for holding a third optical fiber and a fourth optical fiber;
a light source optically coupled to said second optical fiber;
a photodetector optically coupled to said fourth optical fiber;
a controller connected to said moveable support whereby the optical axes of said second and said fourth optical fibers are aligned by moving said movable support until the light received by the photodetector has a certain intensity; and
a heat source thermally coupled to said first optical fiber, said second optical fiber, said third optical fiber and said fourth optical fiber, whereby said heat source fuses said first optical fiber to said third optical fiber and said second optical fiber to said fourth optical fiber.

9. The optical fiber splicing apparatus of claim 8 said first support having:
a first groove for holding said first optical fiber;
a second groove for holding said second optical fiber, said first groove and
said second groove having a certain pitch; and
said second support having
a third groove for holding said third optical fiber; and
a fourth groove for holding said fourth optical fiber, said third groove and said fourth groove having said certain pitch.

10. The optical fiber splicing apparatus of claim 9 wherein said first groove and said second groove are disposed to position the optical axes of said first optical fiber and said second optical fiber substantially parallel to each other; and said third groove and said fourth groove are disposed to position the optical axes of said third optical fiber and said fourth optical fiber substantially parallel to each other.

11. The optical fiber splicing apparatus of claim 10 wherein the distance between the optical axis of said first optical fiber and the optical axis of said second optical fiber is substantially the same as the distance between the optical axis of said third optical fiber and the optical axis of said fourth optical fiber.

12. The optical fiber splicing apparatus of claim 8 wherein said light source is a laser.

13. The optical fiber splicing apparatus of claim 8 wherein said heat source comprises a pair of electrodes.

14. A method for the fusion splicing of optical fibers comprising:
mounting a first optical fiber to a first support and a second support, wherein said first support and said second support are apart from one another;
mounting a second optical fiber to said first and said second supports;
severing said first and second optical fibers between said first support and said second support;
aligning said severed ends of the first optical fiber with the severed ends of the
second optical fiber so as to form two pairs of aligned severed ends; and fusion splicing at least one pair of aligned severed ends together.

15. A method for splicing optical fibers comprising the steps of:
coupling a first optical fiber and a second optical fiber to two splice supports;
cleaving said first optical fiber and said second optical fiber between said two splice supports, wherein said first optical fiber is separated into a first alignment fiber and a first splice fiber, and said optical splice fiber is separated into a second alignment fiber and a second splice fiber;
aligning the optical axes of said first and second alignment fibers thereby bringing the optical axes of said splice fibers into optical alignment;
splicing said first splice fiber to said second splice fiber thereby forming a spliced fiber.

16. The method of claim 15 wherein the step of aligning is accomplished using an active alignment technique.

17. The method of claim 15 further comprising the steps performed after the step of splicing of:
splicing said first alignment fiber to said second alignment fiber;
measuring the splice losses in the splice between said first alignment fiber to said second alignment fiber; and
determining the suitability of said spliced fiber for use in an optical device.
